(19) **Europäisches Patentamt**
**European Patent Office**
**Office européen des brevets**

(11) **EP 4 687 278 A1**

(12) **EUROPEAN PATENT APPLICATION**

(43) Date of publication:
04.02.2026 Bulletin 2026/06

(21) Application number: 24191916.6

(22) Date of filing: 30.07.2024

(51) International Patent Classification (IPC):
$H02M\ 7/49^{(2007.01)}$     $H02M\ 7/483^{(2007.01)}$
$H02M\ 1/32^{(2007.01)}$

(52) Cooperative Patent Classification (CPC):
H02M 7/4835; H02M 1/325; H02M 7/49

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Dukosi Limited
Edinburgh EH3 8RA (GB)

(72) Inventors:
• CRYMBLE, Timothy
Edinburgh, EH3 8RA (GB)
• SYLVESTER, Joel
Edinburgh, EH3 8RA (GB)

(74) Representative: Finnegan Europe LLP
1 London Bridge
London SE1 9BG (GB)

(54) **DEVICE FOR BATTERY CELLS**

(57) A method and system for transforming between a DC voltage and an AC voltage in a battery pack is disclosed, in which information associated with a desired AC waveform is transmitted from a controller to one or more nodes within the battery system, each node comprising CHB circuitry. Information associated with the desired AC waveform is expressed in a rotational measurement frame and transmitted to the one or more nodes. Each node is configured to convert the information associated with the desired AC waveform expressed in the rotational measurement frame into a stationary measurement frame to output the desired AC waveform.

Figure 4

**Description**

**Technical Field**

Embodiments of the present disclosure relate to a DC-AC conversion device and methods for controlling DC-AC conversion. The herein disclosed embodiments may be utilized in a wide variety of applications, including, but not limited to energy integration, energy storage systems, grid-tied systems, grid stability and quality, electric vehicles, multi-phase motor control and any other applications that require DC to AC conversion and vice versa.

**Background**

A DC-AC converter is a system designed for converting direct current (DC) to alternating current (AC). Conversion from DC to AC is often referred to as an inversion, and such a device may be referred to as an inverter. A converter for AC to DC is often known as a rectifier. However, many converter architectures can behave both as inverters and as rectifiers as the application demands. Known DC-AC inverters comprise several components, including a DC input source, and switching circuit with power transistors or other semiconductor devices, and filtering circuits. The DC input is usually sourced from batteries, solar panels, or other DC current sources. The inverter circuit modulates the DC input to produce a sinusoidal or other waveform that can approximate to a sine wave AC output signal. The filtering circuits shape the AC waveform into a sinusoid and remove any undesirable harmonics or other noise from the DC source or AC load.

DC-AC conversion finds widespread use for different applications. For example, one prominent use is in uninterruptible power supply (UPS) systems, where they serve as a bridge between backup current sources, such as batteries, and the critical AC loads during power outages. DC-AC converters are also widely used in renewable energy systems, such as solar power systems, where they are configured to convert the DC output generated by the solar panels, into usable AC current for use in homes and businesses, and/or for feeding into the electrical grid. Additionally, they are employed in electronic devices, ranging from laptops to home appliances, ensuring compatibility with AC power sources. Generally, it is easy to store electrical energy in DC batteries. Electrical distribution is generally via AC, for instance the electric grid uses AC. High power loads such as motors are generally AC. The flexibility and adaptability of DC-AC converters make them indispensable in modern power systems, contributing to the efficient and reliable utilization of electrical energy.

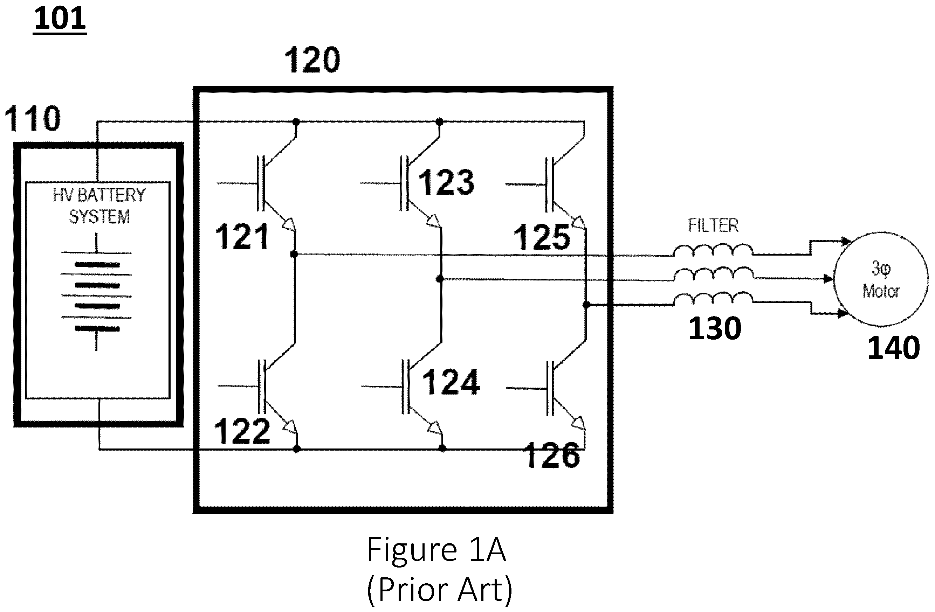

Figure 1A is a schematic diagram illustrating a simple high voltage (HV) DC-AC converter 101 used for generation of a 3-phase AC signal to control operation of a 3-phase motor 140. Converter 101 comprises a battery pack 110 generating DC current. Battery pack 110 may comprise multiple battery cells arranged in series. Converter 101 may further comprise H-bridge circuit 120, for switching the DC battery voltage to a three-phase AC output signal. The three-phase AC output signal generated by converter 101 may be used, for example, to control operation of motor 140.

Conversion between DC and AC may be achieved using an H-bridge circuit 120. H-bridge circuit 120 may comprise multiple power transistors 121, 123, ..., 126. Power transistors 121, 123, ..., 126 may comprise, for example, any one of Bipolar Junction Transistors (BJTs), Metal-Oxide-Semiconductor Field Effect Transistors (MOSFETs) or Insulated Gate Bipolar Transistors (IGBTs) that may be controlled by a dedicated circuit or driver (not shown). H-bridge circuitry 120 may receive input from an external source and based on the received input, it may activate appropriate transistors to create a desired output signal. For example, pulse width modulation (PWM) may be employed whereby a duty cycle of individual transistors may be adjusted to achieve the required waveform. The pulse width modulated waveform output consists of high frequency pulses containing many harmonics. Filter 130 is required to shape the PWM wave output into a sinusoid.

One application of converter 101 may relate to driving and controlling operation of a motor 140 of an electric vehicle. In other applications, the amplitude of the AC output may require adjustment via a transformer capable of stepping the signal up or down. Other applications might include converting the DC signal generated by a wind turbine or solar panels to AC for supply to the grid via a transformer. In general, the converter 101 may be configured to take an input DC signal and convert it to a multi-phase AC output, depending on the required application.

Note that energy can flow in either direction depending on the timing of the switch control signals. Energy can move from the DC battery to the AC motor, or from the AC motor (if it is driven and acting as a generator) to the DC battery. It is also worth noting that the AC grid requires a similar converter connection as an AC motor. There are three high voltage phases, each 120 degrees apart, and energy can flow into and out of the grid or motor. For this reason, motor 140 of Figure 1A may be regarded more generally as an electrical load, representing a motor, a generator or an AC grid system.

In conventional DC-AC converters, such as converter 101 of Figure 1A, the DC power source is separate from the H-bridge circuitry, which generates the three-phase AC signal. There are however some limitations associated with this design. One limitation is the size and cost associated with this architecture. The switches of H-bridge circuitry 120 generate unwanted energy at high frequencies that must be removed by large filters. Another limitation is that current switching is performed on the full battery voltage, without any customizability being afforded. This often results in significant switching losses. High frequency switching of large voltages may introduce additional losses relating to electromagnetic interference (EMI) and compromised power quality.

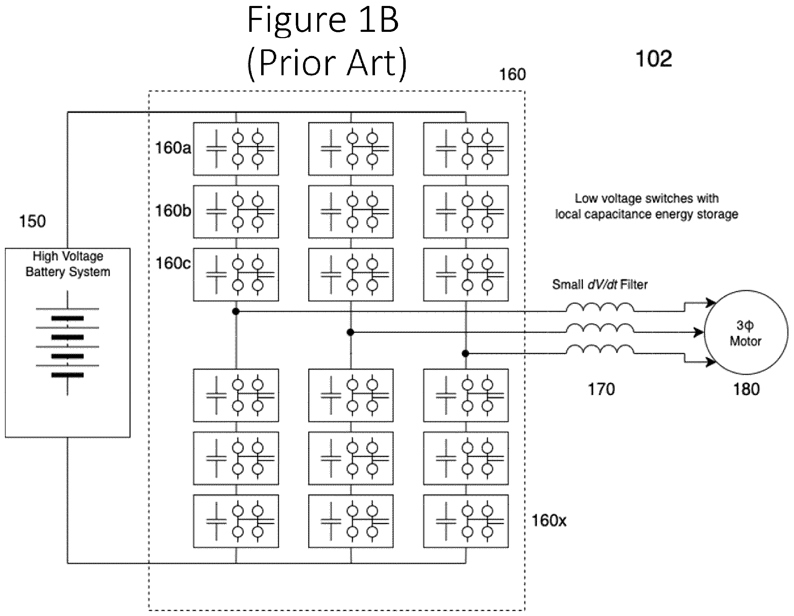

Figure 1B illustrates a high voltage Multilevel DC-AC converter 102. Converter 102 comprises an HV battery system 150, multilevel H-bridge circuitry 160 and filter 170. Converter 102 may be used for generation of an AC signal to control operation of motor 180. Multilevel circuitry 160 may comprise multiple switches or transistors 160a, 160b, 160c ... 160n, each switch equipped with a storage capacitor to provide voltage support and balancing. In the multilevel architecture each transistor of multilevel circuitry 160 may switch lower voltages in comparison with H-bridge circuitry 120 of Figure 1A.

Some advantages associated with the multilevel DC-AC converter include reduced harmonic distortion, improved efficiency, voltage balancing and better fault tolerance. However, the circuitry comprised in the multilevel H-bridge architecture introduces additional complexity in terms of system control and hardware/wiring required. Moreover, converter 102 may require higher count of active and passive components (e.g. transistors, capacitors, wiring etc.) further increasing the size and cost of the converter.

The drawbacks associated with the converter architectures shown in Figures 1A and 1B may be addressed by providing a semi-integrated inverter solution based on cascaded H-bridge (CHB) circuitry. The CHB architecture separates the battery pack into multiple groups of cells, each group configured as a node, each node controlling its own H-bridge circuitry. A node could comprise a single energy storage cell or a group of energy storage cells connected in series and/or in parallel.

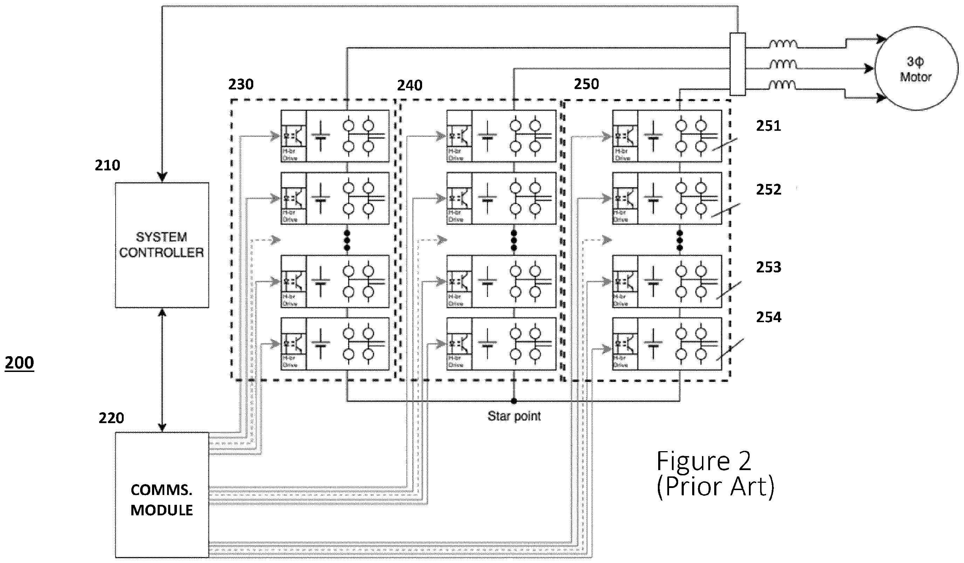

Figure 2 illustrates a multi-level converter 200, where the battery pack is integrated into the CHB circuitry. This integration is achieved by splitting the battery pack into multiple groups of battery cells and combining each group of battery cells with multilevel circuitry. Each battery cell or group of cells is connected with a corresponding H-bridge and its driver comprising a single node. System controller 210 controls operation of converter 200 by communicating directly with each node of the CHB circuitry 251, 252, 253, 254... to produce AC output by arranging nodes into "strings" 230, 240 and 250. Each string is responsible for producing one phase of the AC output.

The communication between the system controller and individual nodes may be realized by directly wiring each node with communication module 220. To avoid potential EMI, this solution requires high number of carefully isolated connections leading to complex and expensive converter. Alternatively, nodes within each string 230, 240 and 250 may be connected in a daisy chain configuration, however this approach may introduce communication latency that may be large and variable, while still requiring a significant number of isolated connections.

To address potential EMI and isolation issues wired connections may be replaced with wireless communications. Operational information may be combined into data packets that may be communicated wirelessly to the CHB. However, the issues of latency remain, significantly limiting the rate of operation of such system, rendering it ineffective for high frequency applications.

It is an object of at least some of the herein disclosed embodiments to address at least some of the shortcomings associated with conventional DC-AC inverters.

## Summary

In accordance with an aspect of the disclosure there is provided a method for transforming between a DC voltage and an AC voltage, in a system comprising a controller, a communication channel, and a plurality of nodes, each node comprising at least one energy storage cell and a processing module, and wherein the controller and each node communicate via the communication channel. The method may comprise: generating an operational data packet, the operational data packet comprising information indicative of a desired AC waveform expressed in a rotating reference frame, and information indicative of a rate of rotation of the reference frame as a function of time; transmitting the operational data packet from the controller to the plurality of nodes via the communication channel; receiving the operational data packet at the plurality of nodes. Each node may be configured to: synchronize an initial phase value with the phase at the controller using the information indicative of the desired AC waveform; determine one or more values of the desired AC waveform at one or more times, using the information indicative of the rate of rotation of the reference frame and the time-varying AC waveform; convert the one or more values of the desired AC waveform determined at the one or more times expressed in the rotating reference frame, into one or more amplitude and phase values of the desired AC waveform expressed in a stationary reference frame; and control operation of a power switching circuit comprised in the node to transform the DC voltage of the at least one energy storage cell comprised in the node, to at least a portion of the AC voltage, based on the one or more phase and amplitude values expressed in the stationary reference frame. In this way, once the operational data packet has been received, each node may generate one or more values of the desired AC waveform. Furthermore, since the operational data packet is received by each node within the system, each node is able to independently generate the one or more values of the desired AC waveform. This introduces a degree of redundancy in the system, since if any node become inoperative, the remaining nodes may continue to transform the DC voltage to the desired AC voltage. Processing complexity and efficiency is improved by transmitting the information indicative of the desired AC waveform expressed in the rotating reference frame in the transmitted operational data packet, from the controller to each node, since all calculations to determine the one or more values of the desired AC waveform at each node may also be carried out in the rotating reference frame. In particular, in certain embodiments the rotating reference frame may comprise the direct-quadrature-zero (dqz) reference frame. This significantly simplifies the processing complexity. Conversion of the one or more values of the desired AC waveform expressed in the rotating reference frame into one or more amplitude and phase values of the desired AC waveform expressed in the stationary reference frame may be carried out at the nodes, reducing the processing overhead of the controller.

In some embodiments, the information indicative of the time-varying waveform may comprise any one or more of: phase, phase increment; time increment information. The phase or time increment may be predetermined. In some embodiments each node may be provided with the predetermined phase or time increment. For example, each node may be preconfigured with the predetermined phase or time increment. In some embodiments the phase or time increment may be obtained from the information indicative of the desired AC waveform. The number of phases of the desired AC waveform may be greater than or equal to one. In some embodiments the number of phases of the desired AC waveform may be three. It is to be appreciated however, that the desired AC waveform may comprise any desired number of phases, and that the precise number of phases will be dictated by the intended application. The number of phases is immaterial to the herein disclosed methods, which may cater for any number of phases.

Each node may be further configured to determine one or more subsequent values of the desired AC waveform at one or more subsequent times based on a phase or time increment; convert the one or more determined subsequent values of the desired AC waveform expressed in the rotating reference frame, into values expressed in the stationary reference frame; and control operation of the power switching circuit comprised in the node to transform the DC voltage of the at least one energy storage cell comprised in the node, to one or more subsequent portions of the AC voltage, based on the one or more determined subsequent values of the desired AC waveform expressed in the stationary reference frame. In some embodiments, each node may be configured to iteratively determine the one or more subsequent values of the desired AC waveform, convert the one or more determined subsequent values, and control operation of the power switching circuit to transform the DC voltage into the one or more subsequent portions of the AC voltage. In this way, once the initial operational data packet has been received by a node, the node is able to iteratively generate subsequent values of the desired AC waveform without requiring any further input from the controller. Thus, any interruption in data communication between the controller and a node may have no detrimental impact on the ability to continue converting the DC voltage to the desired AC voltage.

In accordance with some embodiments, where the rotating reference frame comprises the dqz reference frame, the desired AC waveform expressed in the dqz reference frame may be a non-time varying waveform. Each node may be configured to: determine the one or more values of the non-time varying waveform in the dqz reference frame at the one or more times, using the information indicative of the rate of rotation of the dqz reference frame and the non-time varying waveform; and convert the one or more values of the non-time varying waveform determined in the dqz reference frame at the one or more times, into one or more amplitude and phase values of the desired AC waveform in the stationary reference frame.

Each node may be configured to control operation of the power switching circuit comprised in the node in accordance with an activation sequence. The activation sequence may define an order in which the plurality of nodes activate their associated power switching circuits to transform the DC voltage of the at least one energy storage cell comprised in each node to the portion of the AC voltage. The activation sequence may be determined based on a state of charge of each energy storage cell in the plurality of nodes. The state of charge may be measured, and the activation sequence may be determined based on the measured state of charge of each energy storage cell. Similarly, the activation sequence may be determined based on any one or more of a voltage, a state of health, a state of power of each energy storage cell in the plurality of nodes.

In accordance with some embodiments the power switching circuit may comprise any one of: an H-bridge circuit, a half-bridge circuit, a boost converter.

The method may further comprise receiving information indicative of an output current output from the system when the system is operatively connected to an electrical load; comparing the information indicative of the output current with the information indicative of the time-varying AC waveform; and determining an AC waveform correction if the information indicative of the output current is not consistent with the desired time-varying AC waveform. The AC waveform correction may be transmitted from the controller to the plurality of nodes via the communication channel. The method may comprise generating a new operational data packet comprising information indicative of a new desired time-varying AC waveform expressed in the rotating reference frame, based on the determined AC waveform correction; and transmitting the new operational data packet from the controller to the plurality of nodes via the communication channel. Determining the AC waveform correction may comprise compensating for a time delay introduced between the controller and each node. In accordance with some embodiments, a smith predictor may be used to compensate for the time delay introduced between the controller and each node. The information indicative of the output current may be received from a measurement device, such as a Hall Effect Sensor. The electrical load may comprise any kind of electrical power consuming device such as a motor, electric grid, AC machine, or any other power consuming entity.

In accordance with some embodiments the wireless communication channel may be galvanically isolated.

In accordance with another aspect of the disclosure there is provided a processing module for transforming between a DC voltage and an AC voltage. The processing module may be configured for coupling to at least one energy storage cell. The processing module may comprise: a transceiver configured to receive an operational data packet, the operational data packet comprising information indicative of a desired AC waveform expressed in a rotating reference frame, and information indicative of a rate of rotation of the reference frame as a function of time; and at least one processor configured to: synchronize an initial phase value with a phase at a controller located remotely from the processing module, using the information indicative of the desired AC waveform; determine one or more values of a phase of the desired AC waveform at one or more times, using the information indicative of the rate of rotation of the reference frame and the AC waveform; convert the one or more values of the desired AC waveform determined at the one or more times expressed in the rotating reference frame, into one or more amplitude and phase values of the desired AC waveform expressed in a stationary reference frame, and control operation of a power switching circuit operatively connected to the at least one storage energy cell, to transform the DC voltage of the at least one energy storage cell, to at least a portion of the AC voltage, based on the one or more phase and amplitude values expressed in the stationary reference frame.

In accordance with yet a further aspect of the disclosure, there is provided a controller for use in a system comprising a plurality of nodes, to transform between a DC voltage and an AC voltage, each node comprising at least one energy storage cell. The controller may comprise at least one processor configured to: generate an operational data packet, the operational data packet comprising information indicative of a desired AC waveform expressed in a rotating reference frame, and information indicative of a rate of rotation of the reference frame as a function of time; a transceiver configured to transmit the operational data packet to the plurality of nodes, the operational data packet enabling each node to: synchronize an initial phase value with a phase at the controller using the information indicative of the desired AC waveform; determine one or more values of the desired AC waveform at one or more times, using the information indicative of the rate of rotation of the reference frame and the time-varying AC waveform; convert the one or more values of the desired AC waveform determined at the one or more times expressed in the rotating reference frame, into one or more amplitude and phase values of the desired AC waveform expressed in a stationary reference frame; and control operation of a power switching circuit comprised in the node to transform the DC voltage of the at least one energy storage cell comprised in the node, to at least a portion of the AC voltage, based on the one or more phase and amplitude values expressed in the stationary reference frame.

In accordance with yet a further aspect of the disclosure, there is provided a computer readable non-transitory medium, comprising instructions, which when executed by a computing device, cause the device to carry out the previously described method.

## Brief Description of the Drawings

Specific embodiments of the foregoing will be described in more detail with reference to the accompanying drawings, in which:

Figures 1A and 1B are schematic illustrations of a prior art inverter;

Figure 2 is a schematic illustration of prior art inverter embedded within a battery pack comprising a plurality of battery cells, using wired connections to connect the system controller to the plurality of battery cells;

Figure 3 is a schematic illustration of a system comprising a battery pack featuring a plurality of battery cells, each configured to communicate wirelessly with a remotely located radio manager and controller, the system configured to transform between a DC voltage and an AC voltage, in accordance with embodiments of the disclosure;

Figure 4 is a schematic illustration of an exploded view of the functional components comprised in each node and the functional components comprised in the controller of Figure 3;

Figure 5 is a schematic illustration of the processing module comprised in each node illustrated in Figures 3 and 4;

Figure 6 is a schematic diagram illustrating operation of a string of nodes to generate a single phase AC waveform, in accordance with embodiments of the disclosure;

Figure 7 is a schematic diagram illustrating operation of three string of nodes to generate a three-phase AC waveform, in accordance with embodiments of the disclosure;

Figure 8 is a schematic diagram illustrating the effect of operational data package on AC signal generation, in accordance with embodiments of the disclosure;

Figure 9 is a schematic diagram of control loop implementations and their corresponding response times, in accordance with embodiments of the disclosure; and

Figure 10 is a schematic illustration of the exploded controller of Figure 4 comprising a Smith Predictor to compensate for feedback time delay, in accordance with embodiments of the disclosure.

**Detailed Description of Embodiments**

In the following illustrative description of embodiments, like numbered reference numerals appearing in different figures will be used to refer to shared features.

The descriptions of the various embodiments of the present disclosure have been presented for purposes of illustration and are not intended to be exhaustive or limiting to the scope of the disclosure. Many modifications and variations of the disclosed embodiments will be apparent to those of ordinary skill in the art from the herein disclosed embodiments, without departing from the scope of the disclosure. The terminology used herein to disclose the embodiments of the disclosure was chosen to best explain the principles of the embodiments, the practical application or technical improvement over technologies found in the marketplace, or to enable others of ordinary skill in the art to understand the embodiments disclosed herein.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable sub-combination or as suitable in any other described embodiment of the disclosure. Certain features described in the context of various embodiments are not to be considered essential features of those embodiments, unless the embodiment is inoperative without those elements.

At least some of the embodiments of the disclosure aim to address at least some of the shortcomings associated with the prior art solutions by providing new systems and control methods over a cascaded H-bridge (CHB)-based converter utilizing wireless communication for delivery of operational information. To reduce latency associated with delays in transmitting data packets, even if such delays may be on the order of milliseconds, the herein disclosed embodiments may integrate a local processing module within the CHB circuitry. In this way, the CHB may independently and continuously control conversion between DC and AC in between reception of data packets with updated operational information allowing for converter operation at frequencies far exceeding conventional CHB-based solutions.

The following embodiments disclose a converter architecture and control methods using a DC signal as an input to generate a multiphase AC output. Although specific examples of a DC input may be cited, e.g. a battery pack, solar panels, wind turbine etc. it is to be understood that any source of DC power may be provided as an input. Likewise, specific applications of an AC output may be given as an example, for instance to drive a 3-phase motor (e.g. an electric motor) or grid applications. However, the AC signal generated using the disclosed systems and methods, may comprise any number of phases and may be used for a wide range of applications from grid applications, through to personal and industrial electronic appliances, to any other application that requires DC conversion into a single phase or multiphase AC signal. Whilst the herein disclosed embodiments are described from the perspective of converting a DC input to an AC input, it is to be appreciated that the herein disclosed systems and methods may equally be used to convert an AC input into a DC output.

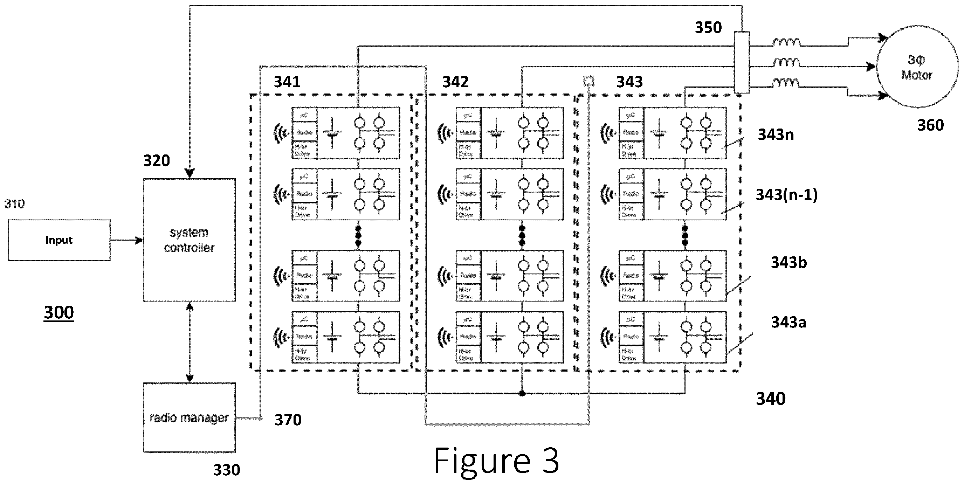

Figure 3 is a schematic diagram illustrating system (or converter) 300 in accordance with embodiments of the present disclosure. System 300 may be implemented in a battery pack comprising a plurality of nodes 341, 342, 343. Each node may comprise at least one energy storage cell, such as a battery cell, and a processing module. Each node may also comprise an H-bridge circuit. In this way, the plurality of nodes define a cascaded H-bridge circuit (CHB) 340. System 300 may also comprise a system controller 320 located remotely from the plurality of nodes 341, 342, 343, configured to communicate wirelessly with each node via radio manager 330 (may also be implemented using a transmitter or a transceiver due shared functionality). In this way, effectively, CHB circuitry 340 is integrated into the battery pack. Wireless communication is used for data communication between system controller 320 and CHB circuitry 340.

In response to input 310, system controller 320 may generate an operational data packet comprising information indicative of a desired AC waveform. The operational data packet may be communicated via radio manager 330 to each node 341, 342, 343. The operational data packet may be transmitted to all nodes 341, 342, 343 simultaneously using a wireless protocol. The wireless protocol may be implemented using a near field protocol, or any other wireless communication protocol. Radio manager 330 may be operatively connected to bus antenna 370, which extends within the battery pack in proximity of the nodes 341, 342, 343. Each node may be provided with a wireless communication module, such as an RF antenna, configured to communicate wirelessly with bus antenna 370. In addition, individual nodes (e.g. nodes 343a, 343b, ..., 343n etc.) may also communicate measurements and status information associated with the corresponding battery cell to system controller 320, via bus antenna 370.

Use of packetized communications between system controller 320 and nodes 341, 342, 343 is advantageous, since it enables redundancy or error detection features to be incorporated into the data packet, along with the information indicative of the desired AC waveform. These features may relate to error detection or correction codes, cyclic redundancy checks (CRC), or the like. Some non-limiting examples of packetized radio protocols include the IEEE802.11 and IEEE802.15 families of protocols, time-division multiple access (TDMA) and code-division multiple access (CDMA) protocols, all of which may be used in accordance with embodiments of the disclosure.

The wireless communication channel may be galvanically isolated. For example, the air gap between bus antenna 370, and the RF antenna comprised on each node may suffice to provide high-voltage insulation. Similarly, any other insulating material could also be placed in the gap between bus antenna 370 and the RF antenna of each node to provide high voltage insulation. However, use of wireless communication may introduce a large latency in communications between controller 320 and CHB circuitry 340. In accordance with some embodiments CHB circuitry 340 may be connected to a load, such as AC machine 360, and a measurement of the load may be taken and forwarded back to system controller 320, thus forming a feedback look. For example, a measurement device 350 may be provided for, configured to measure the output AC current. The current measurement may be sent back to system controller 320, effectively providing a feedback loop. Such a feedback loop may be used to minimize the error between the desired current and the actual current, and in particular to determine if the output AC waveform is consistent with the desired AC waveform. In some embodiments AC machine 360 may comprise a motor, as illustrated in Figure 3. Where required, the system controller 320 may generate and broadcast a subsequent operational data pack to correct the output AC waveform. However, the use of wireless communications introduces latency in this feedback loop. This latency, which is proportional to the time taken for data transfer around the loop (from system control 320, through the nodes of CHB circuitry 340, to measurement device 350 and back to the system controller 320) may be of the order of 10s or 100s of milliseconds. This is undesirable, in particular for motor or grid control applications, which may require control loop response on the order of microseconds.

To address this issue of latency each node 341, 342, 343 may be configured to allow for continued operation of CHB circuitry 340, whilst awaiting receipt of a subsequent operational data packet. Whilst it is envisaged that operational data packets are transmitted by system controller 320 periodically, it is to be appreciated that even when no new operational data packets are received from system controller 320, each node 341, 342, 343 is configured to allow for continued operation of CHB circuitry 340 using information comprised in the last received operational data packet. In this way, once an initial operational data packet is received comprising information indicative of the desired AC waveform, each node may autonomously continue generating subsequent values of the desired AC waveform. In this way, CHB circuitry 340 is able to mitigate for disrupted communications from system controller 320. Whilst Fig. 3 illustrates bus antenna 370, it is to be appreciated that in other embodiments a different type of antenna may be used. For example, antenna 370 may represent a far-field or near-field antenna. Accordingly, the specific type of antenna used is immaterial to the present disclosure, and the specific illustrated examples are non-limiting.

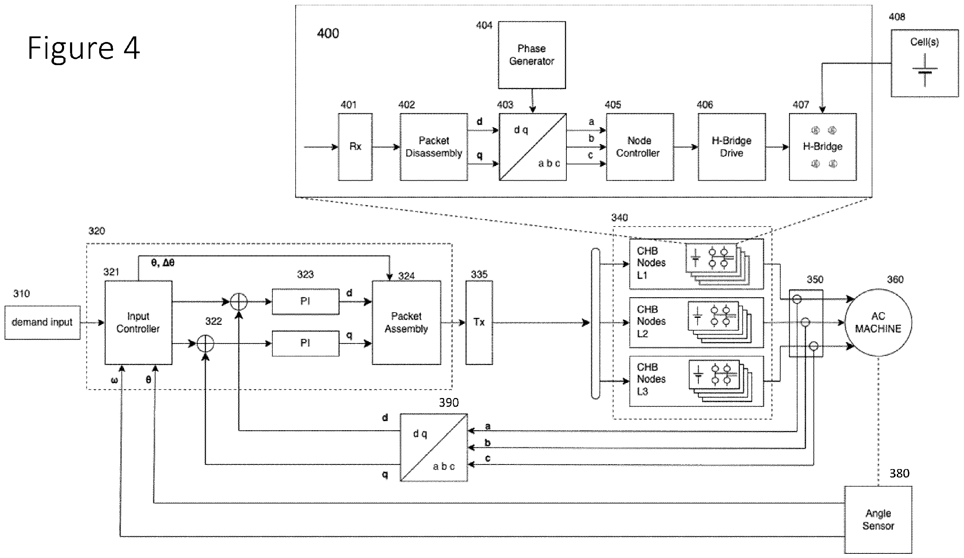

Figure 4 is an exploded schematic illustration of the functional components of each node within CHB circuitry 340, and an exploded schematic illustration of the functional components of system controller 320, in accordance with some embodiments. As described with reference to Figure 3, input 310 is input to system controller 320, which in response generates an operational data packet including information indicative of the desired AC waveform.

Input 310 may be specific to the desired application. For example, when the system 300 is implemented in an electric vehicle, input 310 may relate to a throttle signal, for example, from the vehicle accelerator. Input 310 may be used by system controller 320 to generate the operational data packet, which includes information indicative of the desired AC waveform. For example, the electric vehicle may have a 3-phase motor, and the system 300 may be used to drive the 3-phase motor. The speed demand may be provided via a throttle signal that may have a step function profile, such as a Heaviside step function, or a rate of change faster than the motor can respond to. The 3-phase motor may not be able to respond directly to a step change, so a control signal (e.g. a desired AC waveform) may be generated using CHB circuitry 340 that smoothly changes the controlled speed. In other embodiments, input 310 may relate to other physical parameters, for example torque, position, rotational frequency etc. Thus, the type of AC waveform generated may also be dependent on the type of input 310 received.

Input 310 is forwarded to the system controller 320, and more specifically to input controller 321. Input controller 321 may be configured to generate information indicative of the desired AC waveform. For computational convenience, the information indicative of the desired AC waveform may be expressed in a rotating reference frame, such as the direct-quadrature-zero (*dqz*) rotating reference frame.

The *dqz* transform is a mathematical transform that converts three-phase time-domain signals expressed in a stationary reference frame *(a,b,c)*, into a three-coordinate *(d,q,z)* rotating reference frame. The *dqz* transform is a combination of the Clarke and Park transforms. The Clarke transform converts three phase vectors *(a,b,c)* of a balanced three-phase system into two values $\alpha$ and $\beta$. The Park transform converts these values into a rotational reference frame with the output values *d* and *q*. For a given phase angle $\theta$, the inverse *dqz* transform may be used to recreate the three-phase signal vectors from values *d* and *q*. Clarke/Park transforms may additionally include a third parameter known as zero-axis (*z*). The zero-axis component is associated with the unbalanced conditions and does not contribute to real or reactive power, as in most applications its contribution is negligible. Thus, the *dqz* reference frame may in fact be referred to as *dq0* or just *dq* frame. In practical terms, conversion of three phase vector (*a, b, c*) into the *dqz* reference frame may be calculated according to Equation 1:

$$
\begin{bmatrix} d \\ q \\ z \end{bmatrix} = \frac{2}{3} \begin{bmatrix} \cos(\theta) & \cos(\theta - \frac{2\pi}{3}) & \cos(\theta + \frac{2\pi}{3}) \\ -\sin(\theta) & -\sin(\theta - \frac{2\pi}{3}) & -\sin(\theta + \frac{2\pi}{3}) \\ \frac{1}{2} & \frac{1}{2} & \frac{1}{2} \end{bmatrix} \begin{bmatrix} a \\ b \\ c \end{bmatrix}. \qquad \text{Eq.1}
$$

Use of the *dqz* frame of reference for representing the desired AC signal is advantageous since it is a rotating frame of reference. In this frame of reference, the desired AC signal values, if plotted, appear as slowly varying DC values. Accordingly, mathematical calculations are simpler to carry out when working in the *dqz* rotating reference frame. In contrast, input values expressed in the *abc* or $\alpha\beta$ stationary frames of reference may continuously vary as the desired AC waveform is generated. If plotted, the *abc* or $\alpha\beta$ values may resemble periodic functions (e.g. sine waves) with the same frequency as the desired generated AC waveform.

Referring back to Figure 4, subtractor 322 determines the difference between the desired AC waveform and the actual measured AC waveform, as measured by measurement device 350 and expressed in *dq* reference frame following Clarke/Park transform performed by frame transformer 390. This difference, or error, is fed into feedback controllers 323, which are used to generate a correction of the desired AC waveform, or otherwise update the desired AC waveform to bring the generated output AC waveform in line with the desired AC waveform as determined from input 310. Any type of a suitable controller such as Proportional-Integral (PI) controller, Proportional-Derivative (PD) controller, Proportional-Integral-Derivative (PID) or similar may be used as a feedback controller 323. The disparity between the desired AC waveform and the generated output AC waveform as measured by sensor 350, is translated by controllers 323 into operational values.

Feedback controllers 323 output operational values in the *dq* rotating reference frame, which are subsequently assembled, along with phase information $\theta$ and phase increment information $\Delta\theta$ derived from phase $\theta$ information and angle angular velocity information $\omega$ obtained from angular sensor 380, into an operational data packet, by assembler 324. The operational data packets containing operational values are then wirelessly transmitted by transmitter 335 to each node within CHB circuitry 340. In accordance with some embodiments, transmitter 335 may be comprised in radio manager 330 of Figure 3. A person skilled in the art will recognize that any transmitters or receivers described in the present disclosure may be replaced by transceivers due to shared functionality, and therefore these terms may be used interchangeably throughout the disclosure.

CHB circuitry 340 may comprise multiple nodes arranged into separate strings. Within the present context, each string of nodes may relate to a subset of the nodes. Each separate string may be responsible for generating a single phase of the desired multi-phase AC output signal. For example, if the desired AC waveform is a three phase AC waveform, then each string of nodes may be configured to generate a different one of the phases of the desired AC waveform. The operation of each node may be controlled by processing module 400, the functionality of which is now described below.

Receiver 401 receives the operational data packet wirelessly transmitted from system controller 320. The received operational data packet is then processed by disassembler 402, where the received operational data packet is disassembled. At this stage the information indicative of the desired AC waveform comprised in the received operational data packet is still expressed in the *dq* rotating reference frame. The disassembled operational data packet data is fed into converter 403, which transforms the data from the *dq* to $\alpha\beta$ frame, and then from $\alpha\beta$ to *abc* stationary reference frame.

Use of phase generator 404, illustrated in Figure 4, is advantageous for assisting with addressing latency inherent to wireless CHB-based converters. In operation, phase generator 404 receives information indicative of the desired AC waveform comprised in the received operational data packet, and generates a phase difference to be combined with the disassembled operational data packet data, including the information indicative of the desired AC waveform. The information indicative of the desired AC waveform may comprise any one or more of: information indicative of the reference AC waveform expressed in the rotational reference frame, the rate of rotation of the rotational reference frame, and timing information. The output of phase generator 404, as well as information indicative of the desired AC waveform comprised in the received operational data packet, are combined and transformed from the *dq* to $\alpha\beta$ frame, and then from the $\alpha\beta$ to *abc* stationary reference frame at frame converter 403. The output of frame converter 403 is sent to node controller 405.

Node controller 405 is configured to control the H-bridge circuit by periodically providing instructions to H-bridge driver 406 in the *abc* reference frame (i.e. in the stationary reference frame). The frequency at which instructions may be delivered by H-bridge controller 406 is on the order of 1kHz to 1MHz. This is possible due to phase generator 404, which may keep track of the output waveform generation cycle, prompting node controller 405 to update its instruction for the H-bridge driver 406 accordingly. H-bridge driver 406 controls the operation of the H-bridge 407 by switching relevant transistors on and off, so that the required voltage and polarity provided by each cell or group of cells 408, may be achieved.

Processing module 400 may operate at rates exceeding the rate of operational data packet delivery by several orders of magnitude. Processing module 400 may be configured to control operation of the node, and generate voltage output even during time periods when no new operational data packets are received. In other words, processing module 400 may operate and generate output voltage even when no new operational data packets are received. It is within this context that operation of processing module 400 may be considered continuous. In such scenarios, processing module 400 uses data received in the last received operational data packet to generate voltage output. Operation of processing module 400 is updated once a new operational data packet is received from controller 320, comprising new operational information. In some embodiments, system controller 320 may send instructions in the form of operational data packets to CHB circuitry 340 at a frequency of around 10 to 1000 Hz. This is too low for high frequency operation of CHB circuitry 340. By configuring each node with processing module 400, enables each node to operate independently, and control operation of each individual H-bridge at rates that are greater than the rate at which operational data packets are received. For example, processing module 400 may control operation of each individual H-bridge at rates on the order of kHz to MHz, while awaiting receipt of new operational data packets from controller 320. In this way, delay in receipt of subsequent operational data packets may not adversely impact the frequency of the generated AC voltage.

In the time intervals between receiving updated operational data packets from system controller 320, each node 341, 342, 343, may operate independently based on the instructions generated locally by processing module 400. For example, if a new set of instructions is sent by the processing module 400 every 10 ms, processing module 400 may issue 10,000 instructions in this time frame ensuring continuous operation of H-bridge drive 406 and H-bridge 407. This approach solves the issue of latency inherent in daisy-chained connections, and other forms of packetized communication. In addition, processing module 400 introduces an added level of robustness in cases where an operational data packet is lost or otherwise undelivered. In such situations, the processing module 400 ensures continuous operation of the node based on information comprised in the last received operational data packet. Additionally, since each node is configured with processing module 400, should a node become defective or become non-responsive, other nodes present in the system configured with processing module 400 can continue to generate the required output AC voltage. In this sense, the system architecture provides redundancy.

The operational data packet may comprise information used by processing module 400 to generate its contribution to the final desired AC output. For example, to generate a multi-phase AC output, each operational data packet may comprise information associated with the desired AC waveform expressed in the rotational reference frame, information regarding the rate of rotation of the rotational reference frame, and timing information.

The above description of embodiments described with respect to Figures 3 and 4 relate to the CHB architecture, where the source of the DC input is provided by battery cells comprised in a battery pack. However, it is to be appreciated, that in alternative embodiments the DC input may be provided by alternative sources. For example, it is envisaged that the DC input may be provided by solar panels, wind turbines, or any other source delivering a direct current, in combination with a storage device. In such embodiments, and referring back to Figure 4, a cell or group of cells 408 comprised inside each node may be replaced with an energy storage device, for example a capacitor. The capacitor may be operatively connected to, for example, the solar panels, which in combination with the capacitor may functionally perform a similar role to a battery cell. The capacitor is charged by the solar panel when incident light is converted to DC current, and discharged when the DC current is converted to output AC current.

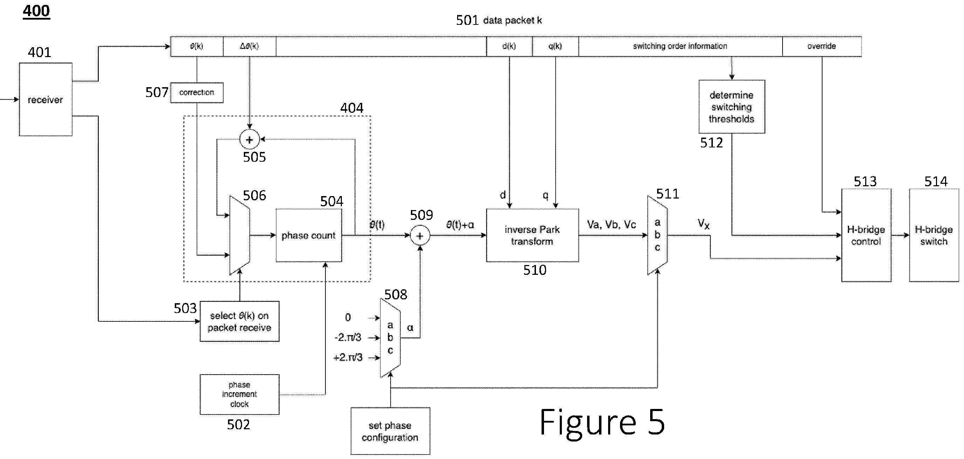

Operation of processing module 400 shown in Figure 4 will now be considered in greater detail with reference to the exemplary embodiment illustrated in Figure 5.

Figure 5 is a schematic diagram of an exemplary implementation of processing module 400 that enables local autonomous H-bridge control at each node. Each node is configured with processing module 400. Following generation of operational data packets comprising operational information by system controller 320 each node receives operational data packets 501 via receiver 401. Operation of processing module 400 may comprise internal phase generator 404, which operates at clock frequencies exceeding that of the data packet update rate, typically by at least one order of magnitude.

Phase generator 404 keeps track of the current global phase $\theta(t)$ of the generated AC waveform by periodically setting phase counter 504 to $\theta(t)$ as indicated in the most recently received operational data packet 501, where $\theta(t)$ denotes a phase value as a function of time $t$. In the present example, receiver 401 of processing module 400 may receive an operational data packet at time $k$, and the information indicative of the desired AC waveform contained in the received operational data packet may be described with reference to time $k$, e.g. the phase of generated waveform $\Theta(k)$ at time $k$, the phase increment $\Delta\theta(k)$ at time $k$ etc. Upon receiver 401 receiving operational data packet 501 sent from transmitter 335, the phase at the local phase generator 404 is synchronized to the system controller 320 via phase selector 503 inputting the $\Theta(k)$ value into phase counter 504 via selector 506. In accordance with some embodiments, the $\Theta(k)$ value may be corrected by correcting module 507. The correction applied may be calculated by system controller 320 as the change in the phase value encoded at system controller 320 prior to operational data packet generation in accordance with a known time delay between the phase at the system controller 320, and the operational packet being demodulated. In other words, the correction may be predetermined. In this way, the initial value of θ(t) may be determined upon arrival of operational data packet 501 at processing module 400, with the predetermined phase correction provided by correcting module 507, added to phase counter 504 by phase selector 506. The predetermined waveform correction may alternatively be applied at system controller 320 prior to transmission, and be included in the transmitted operational data packet, in which case correcting module 507 may be omitted. In some embodiments, the predetermined correction may be sufficiently small that it can be ignored. All CHB nodes may receive operational data packets at the same time, and therefore the same predetermined AC waveform correction may be used at all nodes.

In addition, the operational data packets may contain information regarding phase increment Δθ(k), which defines the value by which phase counter 504 is incremented by phase incrementor 505 for each subsequently generated AC waveform data point. Δθ(k) may denote the first derivative of the phase θ(t) and may be assumed constant for a single packet iteration. Additionally, a second derivative of θ(t) may be included in operational data packet 501 to indicate and modify Δθ(k) increments in the time periods between receipt of new operational data packets (not shown in Figure 5). During each iteration of phase generator 404, phase count is updated by Δθ(k) and phase generator 404 outputs an up-to-date value of θ(t) to be used in further control steps of processing module 400. After n iterations, θ(t) = θ(k) + n.Δθ(k) (ignoring any correction 507 to Δθ(k)).

Adder 509 increments the output of phase generator 404 with phase constant $\alpha$. Phase constant $\alpha$ depends on the phase of the output waveform generated by a node belonging to a given string. For example, if the desired AC output consists of a three phase AC waveform, one phase may reflect the phase of the reference waveform, while the remaining two phases may be offset by $\pm 2\pi/3$ as illustrated. Consequently, phase constant $\alpha$ assigned to nodes within each string by phase selector 508 may be 0, +2π/3 and -2π/3 depending on the phase of AC output generated by the given string. Some embodiments may not require addition of phase constant $\alpha$ to the phase of the reference waveform θ(t), as this information may be mathematically generated at a later stage.

Subsequently, the phase of the reference waveform output by phase generator 404 (that in some embodiments may also include phase dependent constant $\alpha$) may be further combined with information indicative of the desired AC waveform contained in operational data packet 501. The information indicative of the desired AC waveform is expressed in the rotating reference frame (e.g. *dqz* reference frame) and module 510 may perform an inverse Park transform to determine values in the original *abc* reference frame (i.e. stationary reference frame) relating to the three phases of the AC signal (phases *a, b* and *c*).

The result of the inverse Park transform may be expressed according to Equation 2:

$$\begin{bmatrix} V_a \\ V_b \\ V_c \end{bmatrix} = \begin{bmatrix} \cos(\theta) & -\sin(\theta) & 1 \\ \cos\left(\theta - \frac{2\pi}{3}\right) & -\sin\left(\theta - \frac{2\pi}{3}\right) & 1 \\ \cos\left(\theta + \frac{2\pi}{3}\right) & -\sin\left(\theta + \frac{2\pi}{3}\right) & 1 \end{bmatrix} \begin{bmatrix} d(t) \\ q(t) \\ 0 \end{bmatrix} \qquad \text{Eq. 2}$$

where $V_a$, $V_b$, $V_c$ represent voltages of the three output phases, *d(t)* and *q(t)* are the amplitude values of the desired AC waveform output by feedback controllers 323 in the *dq* reference frame, and $\theta$ is the phase of the desired AC waveform at time *t*, as given by the output of 504 and 509. This version of the transform aligns the *a* phase to the rotating frame, other forms where the *a* phase leads or lags the rotating frame are also common.

In the present example, amplitude values of the desired AC waveform d(t) and q(t) are represented by d(k) and q(k) values as provided by operational data packet 501, and are static for the duration of a packet frame. In some embodiments, a further pair of values Δd(k) and Δq(k) may be provided in the operational data packet 501, where the values Δd(k) and Δq(k) may correspond to the first differential or the difference in d and q from one operational data packet to the next. These Δd(k) and Δq(k) values may be used to increment respectively d(t) and q(t) at rates proportional to the rate of operation of phase increment clock 502, facilitating a smooth change of the waveform from packet frame to packet frame.

In embodiments where phase selector 508 adds phase dependent constants $\alpha$ to the phase of the desired AC waveform, Equation 2 may be simplified and only the single phase of interest may be calculated. In such embodiments, phase assignor 511 may be dispensed with. This transform may be referred to as a partial inverse Park transform. Alternatively, in the embodiments where the phase dependent constants $\alpha$ are not added, full matrix calculation of the inverse Park transform may be required, resulting in identical output, and the relevant output selected by phase assignor 511. The output selection may be performed at individual node level based on each node being assigned to a pre-assigned phase. For example, phase assignor 511 may assign phase output corresponding to phase *a* to each node comprised in the set of nodes defining a string responsible for generation of waveform *a*.

The resultant output of component 510 (in some embodiments the output of component 510 also undergoes phase selection in phase selector 511) is a signal indicating the reference voltage value $V_x$ in the *abc* reference frame, where *x* corresponds to one of the phases *a, b* or *c*. Each node in a single string calculates an identical value for $V_x$. In a three-phase system, where each string of nodes is configured to generate a different one of the phases, each string calculates a value with a phase 120° difference to the other phases generated by the other two strings. In a system with more than three phases, Equation 2 above may be extended.

During each cycle of processing module 400, the value $V_x$ may be compared to a threshold by H-bridge controller 513 to determine whether it is the time to change the state of H-bridge 514. Gate 512 determines the threshold based on the switching information included in the operational data packet. If the $V_x$ value passes the threshold determined for a node, then the node may be switched on or switched off. Each node is given a unique ID and preassigned to generate a specific phase of the AC output. Therefore, despite all the operational data packets being made available to all H-bridge controllers, each controller is able to use the instructions relevant to generate the phase preassigned to a cell with a given ID. The state of H-bridge switch 514 can be overridden by an override command set in operational data packet 501.

The switching order of different nodes may be decided based on the state of charge (SoC) measurements, that may be performed in parallel with converter operation. In general, cells connected to nodes that switch on early in the waveform will discharge faster than cells that switch on near the peak of the waveform. To ensure balanced operation of the converter, all nodes may be switched on for the same amount of time, on average. This requires that the switching order control rotates the switching thresholds around the cells to ensure they are discharged (or charged) at roughly the same rate on average. In addition, SoC information may be used to ensure each cell is switched on for an amount of time commensurate with its SoC. Thus, a balancing strategy for energy storage cells may be implemented by following the switching order based on SoC information, where the cells with the highest state of charge may be switched on earlier and remain on for a longer period of time. In the subsequent cycle these same cells may be switched on at a later stage and remain on for a shorter period of time to ensure the battery pack performs in a balanced manner. In this way the battery pack can perform 'active balancing' or 'dynamic charge equalisation' using only the components already utilized for the converter. A person skilled in the art will appreciate that the activation sequence may also be determined based on a voltage, state of health or state of power of each energy storage cell in the plurality of nodes, to ensure balanced operation of the converter as described above with reference to SoC measurements.

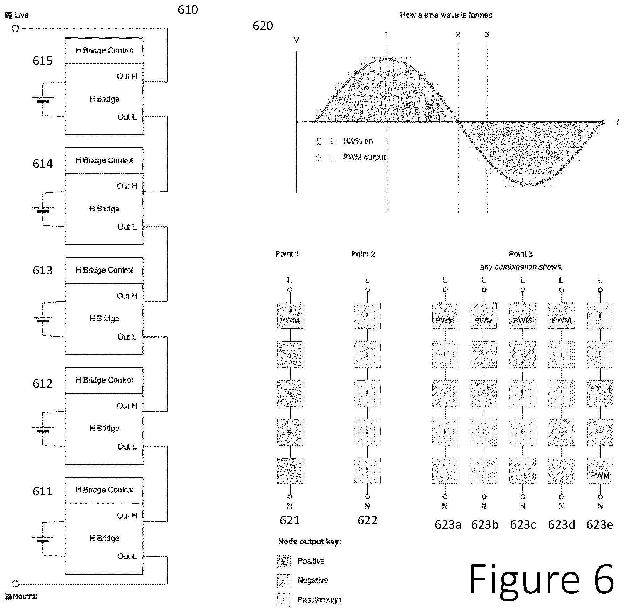

Figure 6 shows a schematic operation of a string 610 configured to generate a single phase of the AC output, as represented by the sine wave 620. In the present example, string 610 comprises five nodes: 611, 612, 613, 614 and 615, each node equipped with a cell (or a group of cells), and comprising a processing module 400 having an H-bridge controller and H-bridge circuit. String 610 may output sine wave 620 by sequentially switching some of its nodes into one of three modes: positive, negative and passthrough. For instance, to produce voltage output equivalent to point 1 of sine wave 620, all nodes must be in positive mode to output maximum positive voltage as shown by configuration 621. By analogy, the voltage value at point 2 of sine wave 620 is equal to zero indicating all nodes remaining in passthrough mode at that instance (see configuration 622). In contrast, delivery of the voltage value indicated by point 3 requires operation of three nodes to deliver output of negative polarity, two of which in negative mode delivering full cell voltage and one operated in PWM, switching between negative and passthrough mode, to provide a fraction of its full voltage. Due to the serial arrangement of the nodes, this may be achieved according to one of multiple equivalent configurations 623a, 623b, ..., 623e, in which different cells may be switched between negative and passthrough modes according to each configuration to deliver the equivalent voltage output. Within the present context by "passthrough mode" is intended that the current continues to flow through the node even if it's not contributing to the AC output voltage at that instance.

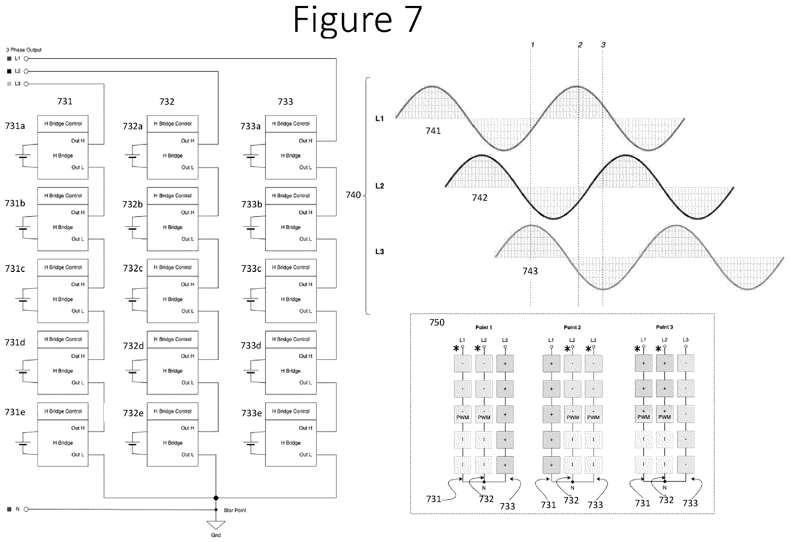

Figure 7 illustrates the generation of an AC waveform using a string of nodes, as described with reference to Figure 6, albeit for the generation of a three phase AC output 740. The three phase AC output comprises sine waves 741, 742 and 743 shifted in phase by $2\pi/3$ from one another. In the illustrated example, three strings 731, 732 and 733, each comprising five nodes (e.g. 731a, 731b, ... 731e) may be controlled to deliver the corresponding sine waveforms 741, 742 and 743. 750 shows the outputs of all three strings along three cutlines at points 1, 2 and 3. At point 1, waveforms 741 and 742 may require identical negative output from strings 731 and 732 (albeit shifted in phase by $2\pi/3$), which may be achieved by two nodes in negative mode delivering full voltage output and one node delivering a fraction of its output through PWM. The remaining nodes in strings 731 and 732 being in passthrough mode. At the same time, waveform 743 may require maximum positive voltage output, thus all nodes of string 733 may be in positive mode to provide maximum positive voltage output. A similar configuration of nodes is required at point 2. However, in this configuration, string 741 delivers maximum positive voltage by operating all nodes in positive mode, and the nodes of strings 742 and 743 provide a fraction of their full negative polarity output voltage.

In contrast, at point 3, strings 741 and 742 deliver a fraction of their peak positive voltage by operating two nodes in positive mode at maximum positive voltage output, in addition to a third node operated in PWM. At the same time, string 743 delivers maximum negative voltage output by operating all nodes in negative mode. It is to be appreciated that a string may deliver a fraction of its full output voltage by varying the operation modes of the nodes. Different combinations of operation modes achieve different output voltages. The specific combinations of operation modes shown in 750 are purely exemplary, and the same resulting output voltage may be achieved by operating different ones of the nodes in different operation modes.

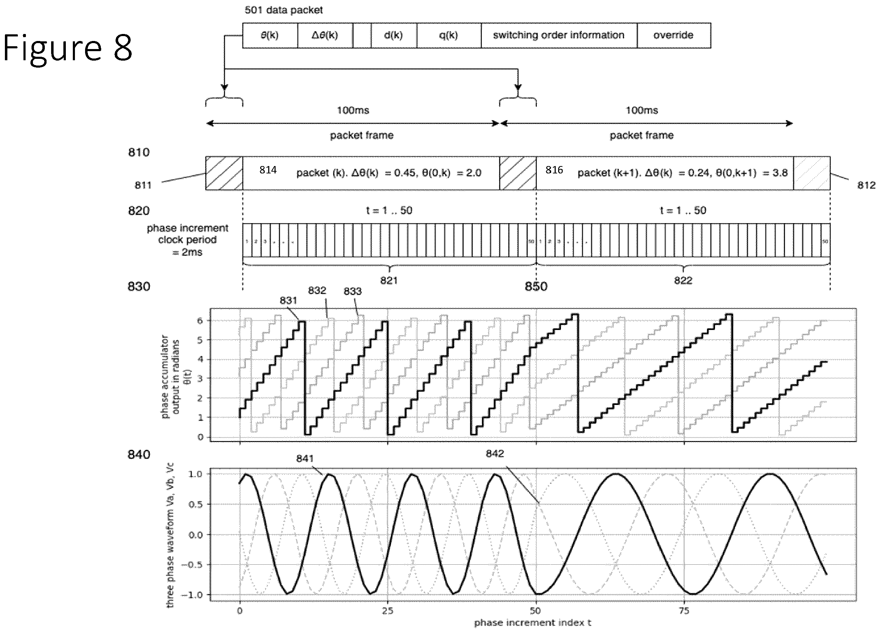

Figure 8 illustrates AC waveforms generated by processing module 400. Operational data packet 501 is shown at the beginning of the packet frame. Receiving and disassembling information indicative of a desired AC waveform from operational data packet 501 may require a shorter period of time than the duration of the packet frame. The remaining time within the packet frame may therefore be used for other communications in the system, for example, reporting the battery state back to system controller 320.

Operation of processing module 400 is now further described with reference to the example illustrated in Figure 8. As shown in panel 810, a new operational data packet may be received at processing module 400 every 100 ms (e.g. operational data packet 814). In this time window phase generator 404 may perform 50 cycles (see panel 820) until arrival of a new operational data packet 816. This time period of 100 ms from receipt of first operational data packet 814 by processing module 400, to receipt of second operational data packet 816 by processing module 400, may be referred to as a packet frame. For example, beginning at time 811 operational data packet 814 (data packet k) may be received and disassembled by receiver 401, which may take, for example, 2 ms. The information indicative of the desired AC waveform obtained from data packet k (814) may be used to perform 50 cycles (see section 821) until the data from second operational data packet 816 (packet (k+1)) becomes available to provide information indicative of the desired AC waveform for the following 50 cycles (822). During each cycle the current state of the reference waveform 840 may be updated by the phase increment $\Delta\theta(k)$ as specified by the information indicative of the desired AC waveform included in the latest received operational data packet.

With each increment of phase generator 404, the process of H-bridge switching may be repeated as described above: the output of phase generator 404 may be combined with a phase-dependent constant $\alpha$ of phase selector 508 (e.g. 0, $-2\pi/3$ and $+2\pi/3$), or directly passed on to the next module. This is shown as three ramped waveforms 831, 832 and 833. The resultant phase value (which may or may not include the phase-dependent constant from phase selector 508) may be further combined with the demand-based information indicative of the desired AC waveform (d(t), q(t)) and may undergo inverse (partial or full) Park transform. The resultant output 841 may be used by H-bridge controller 513 to determine when a given node should be switched on or off and for how long.

Figure 8 also shows a change in the generated AC waveforms at time or transition point 850. Upon receipt and disassembly of second operational data packet 816 (packet (k+1)) by receiver 401, the value of $\Delta\theta(k)$ may be updated based on information comprised in second operational data packet 816, which may indicate a change in the rate of the generated waveform. In the illustrated example, second operational data packet 816 comprises information indicative of a change in the rate of the generated waveform. The change can be seen from point 842. There may also be a discontinuity in the phase generator at the transition point 850 if the new value for $\Theta(k)$ does not match the generated value. In general, at least some embodiments described herein aim to minimize such offset between a new value of $\Theta(k)$ and the generated AC waveform phase, which may occur due to the clock at the system controller 420 running at a different rate to that at each node.

It is to be appreciated that Figure 8 is simplified for clarity. In practice, the packet period may be shorter or longer, and the phase increment rate may be significantly greater that the packet rate, e.g. over a thousand times faster than the packet rate. Also, the phase generator output 830 is shown wrapping at $2\pi$ radians, it may instead wrap at $\pm\pi$ radians, or not be wrapped at all.

In this way, processing module 400 may control generation of the AC output even in the absence of receipt of supplementary operational data packets from system controller 320. In addition to a reduction in inverter size, power losses and EMI, the herein disclosed system is robust, and capable of functioning autonomously until an overriding stop signal is received. Thus, even if some operational data packets fail to be delivered to processing module 400, processing module 400 is still able to function, and generate an output AC waveform.

The use of packetized data communication to communicate with the processing modules 400 of each node may result in a communication data rate slower than the rates required of wired systems. However, configuring each processing module 400 to be able to continue generating an AC waveform in accordance with information comprised in the most recently received operational data packet helps to mitigate for this. Furthermore, because each processing module 400 at every node is capable of autonomous operation, this reduces the update rate necessary to avoid undersampling from multiple times per generated waveform period, to every one or more waveform periods. In turn, this slower update rate may result in delay in the control loop, which may cause instabilities in the system. One way to regain stability may be to slow the loop frequency response, which may also lead to a slowing down of the overall response of the system.

In accordance with at least some embodiments, data output from CHB circuitry 340, such as current or voltage data, may be fed back to controller 320, as illustrated in Figure 4. Accordingly, in such embodiments a feedback loop is established between CHB circuitry 340, or equivalently between the nodes of the system, and controller 320. As previously disclosed, such feedback may be used to improve or correct the generated output AC waveform. However, and again, as mentioned previously, an inherent latency is introduced by this feedback. In the subsequent section of the disclosure, improvements to the feedback loop for the system 300 will be described. The feedback control loop may also be used to control the response of system 300 following a change in input 310.

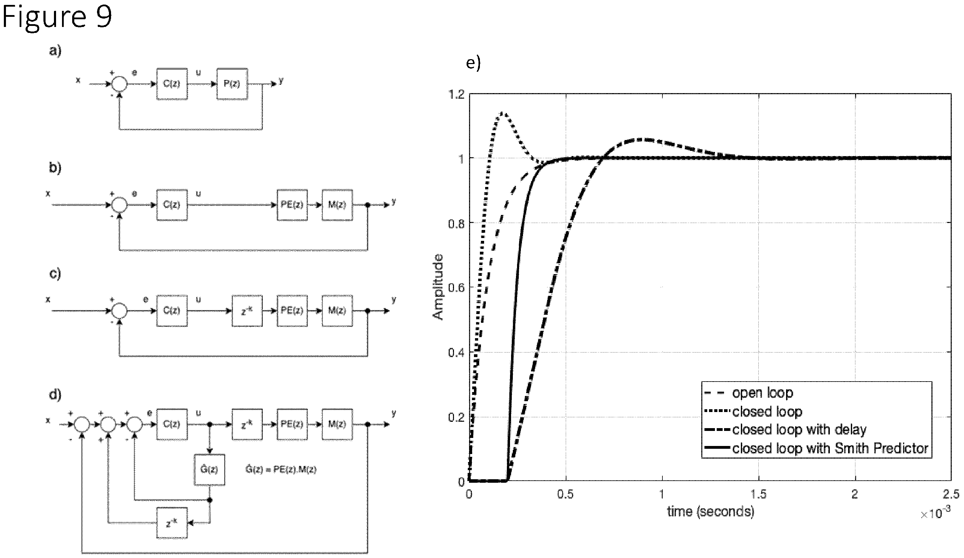

Figures 9a, 9b and 9c are conceptual schematic diagram of different control loop implementations. Their corresponding response times are shown in Figure 9e. Figure 9a shows a simple feedback loop, consisting of controller $C(z)$ and plant $P(z)$. An output of plant $P(z)$ is fed back into controller $C(z)$ via a control gate. The feedback loop of Figure 9a may be implemented in system 200, by routing the output of CHB circuitry back to controller 210, as illustrated in Figure 2. Although the conceptual schematic diagrams of Figures 9a to 9d are illustrated for a discrete time domain $z$, similar formulations can be made in the continuous time s-domain. The feedback loop of Figure 9a can be thought of as an open-loop, where output 'y' drives an electrical load directly. No feedback is taken from the electrical load.

In Figure 9b, the plant $P(z)$ is split into the power electronics $PE(z)$ (e.g. processing module 400) and the electrical load $M(z)$. The electrical load may be an AC machine, a motor or may also represent the electrical grid. A feedback signal is provided from the electrical load back to the controller $C(z)$. There may be more feedback paths, and the feedback paths may have their own responses, however any motor drive architecture can be simplified to one or more loops as depicted in Figure 9b, which may also be referred to as a closed loop.

In Figure 9c a delay $z^{-k}$ has been added between the controller $C(z)$ and the power electronics $PE(z)$. In practice, such a delay $z^{-k}$ may occur due to the transmission of packetized data. Such a delay may have the undesirable effect of reducing the control loop stability. At least some of the herein disclosed embodiments enable removal of the delay $z^{-k}$ from the loop generating the AC waveform, which allows for generation of waveform at frequencies exceeding the limitations resulting from the delay introduced by use of packetized data communications. However, the delay still exists in the system control loop. In other words, the delay introduced by the transmission of packetized data communications between controller 320 and CHM circuitry 340 (or with processing module 400), is undesirable. In accordance with some embodiments, which are disclosed in further detail below, this delay may be mitigated for.

Exemplary step responses from an open loop, closed loop and closed loop with delay $z^{-k}$ = 0.2ms are shown in Figure 9e for comparison. In embodiments that adopt a closed loop, a PI system controller may be introduced configured with a suitable response time, and resulting in improved response times and a significant overshoot of the amplitude of signal $y$. To achieve a more stable response and reduction of the overshoot, the response of $C(z)$ may be slowed with respect to Figure 9b. In this case, the response starts at 0.2ms, but does not settle until about 1. 5ms. In accordance with at least some embodiments, the PI controller 323 may be configured within the controller 320, as illustrated in Figure 4.

In a motor or grid drive application, this slowing in response due to the introduced delay is undesirable. However, the length of the delay is known, and therefore, in accordance with at least some embodiments, may be compensated for using a Smith Predictor. In other words, in accordance with some embodiments a closed feedback loop with a Smith Predictor may be provided. Figure 9d is a conceptual schematic illustration of a closed control loop with a Smith Predictor implemented in it. This may comprise the introduction of a model $G(z)$ of the power electronics $PE(z)$ and $M(z)$ without the delay. The output of this model may be subtracted from the input signal, such that the controller $C(z)$ may react immediately to the expected response of the power electronics $PE(z)$. Then, a time delay k later, the same expected response is added back in the loop. The actual power electronics $PE(z)$ response may be subtracted from the input. In this way, the control loop may react as if the delay $z^{-k}$ was not present. In practice the model $G(z)$ may not behave exactly like power electronics $PE(z)$ and electrical load $M(z)$, and the delay $z^{-k}$ may carry some uncertainty associated with it. However, through the introduction of a Smith predictor the overall response may be improved substantially.

The response of a closed loop with the Smith Predictor is shown in Figure 9e. Note that the power electronics $PE(z)$ response may still be delayed (e.g. starting at 0.2ms as shown in Figure 9e), but the speed of the response is much faster, settling at 0.5ms, which may be similar to the response speed of the closed loop with no additional delay. In contrast to the closed loop, introduction of the Smith Predictor may result in critical damping and effective removal of the overshoot.

In accordance with at least some embodiments, the Smith Predictor may be applied around or within PI controller block 323, in controller 320. For example, the Smith Predictor may be applied by implementing a feedback loop on the output of PI controller 323, that feeds back into PI controller 323. The use of a Smith Predictor in the system controller feedback loop may be highly desirable due to the delays introduced by the packetized data communications. For sufficiently slow applications, introduction of the Smith Predictor may not be necessary.

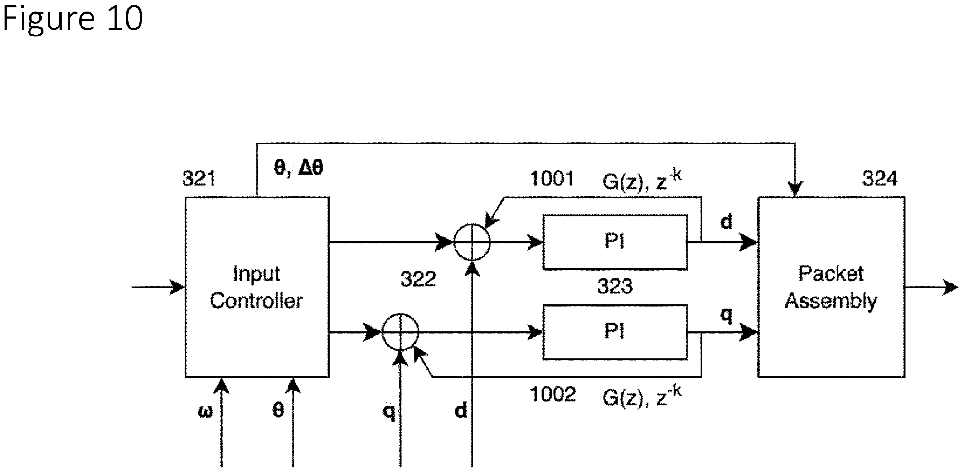

Figure 10 shows an exemplary implementation of the Smith Predictor in PI controllers 323 comprised in system controller 320. As described with reference to Figure 9d, a model $G(z)$ representing the response of converter 300 and the electrical load 360 may be implemented in the electronic component performing the function of feedback controller, which in this embodiment are PI controllers 323. Use of packetized data communication between controller 320 and CHB circuitry 340 may introduce a time delay $z^{-k}$. The output of model $G(z)$ may be subtracted from the signal input to each PI controller 323 from subtractor 322, such that each system controller 320 may react immediately to the expected response of CHB circuitry 340. Then, a time delay $k$ later, the same expected response is added back in the loop. The actual response of the CHB circuitry 340 may be subtracted from the input. In this way, the control loop may react as if the time delay $z^{-k}$ was not present.

It is to be understood, that whilst the majority of the herein disclosed embodiments disclose the generation of a three phase AC waveform, the herein disclosed systems and methods may be applied to generation of an AC signal consisting of any number of phases. It is also to be appreciated that for the efficient operation of a converter generating an AC output where the number of phases exceeds three, mathematical transforms other than Clarke and Park transforms may be required and the exact method may depend on the exact number of phases generated, as well as specific application and system architecture.

Moreover, the system of the present disclosure may operate as a rectifier, taking an AC signal as input and converting it to a DC output. With reference to Figure 3, the system 300 may be considered to operate as an AC-DC converter by reversing the operation of the system. Multiphase AC signal from AC machine 360 (which, in the illustrated embodiments may be a motor) may provide an input that is passed on to the H-bridge circuitry 340. Based on measurements 350 of the AC signal from AC machine 360, the information may be communicated to system controller 320, which in turn may forward switching instructions to CHB circuitry 340. Based on the measurements of the AC signal, the timing of switching of each H-bridge may be adjusted to allow unidirectional current flow.

Further features in accordance with embodiments of the disclosure are outlined in the following clauses:

1. A method for transforming between a DC voltage and an AC voltage, in a system comprising a controller, a communication channel, and a plurality of nodes, each node comprising at least one energy storage cell and a processing module, and wherein the controller and each node communicate via the communication channel, the method comprising:

generating an operational data packet, the operational data packet comprising information indicative of a desired AC waveform expressed in a rotating reference frame, and information indicative of a rate of rotation of the reference frame as a function of time;

transmitting the operational data packet from the controller to the plurality of nodes via the communication channel;

receiving the operational data packet at the plurality of nodes, and wherein each node is configured to:

synchronize an initial phase value with the phase at the controller using the information indicative of the desired AC waveform;

determine one or more values of the desired AC waveform at one or more times, using the information indicative of the rate of rotation of the reference frame and the time-varying AC waveform;

convert the one or more values of the desired AC waveform determined at the one or more times expressed in the rotating reference frame, into one or more amplitude and phase values of the desired AC waveform expressed in a stationary reference frame; and

control operation of a power switching circuit comprised in the node to transform the DC voltage of the at least one energy storage cell comprised in the node, to at least a portion of the AC voltage, based on the one or more phase and amplitude values expressed in the stationary reference frame.

2. The method of clause 1, wherein each node is further configured to:

determine one or more subsequent values of the desired AC waveform at one or more subsequent times based on a phase or time increment;

convert the one or more determined subsequent values of the desired AC waveform expressed in the rotating reference frame, into values expressed in the stationary reference frame; and

control operation of the power switching circuit comprised in the node to transform the DC voltage of the at least one energy storage cell comprised in the node, to one or more subsequent portions of the AC voltage, based on the one or more determined subsequent values of the desired AC waveform expressed in the stationary reference frame.

3. The method of clause 2, wherein each node is configured to iteratively determine the one or more subsequent values of the desired AC waveform, convert the one or more determined subsequent values, and control operation of the power switching circuit to transform the DC voltage into the one or more subsequent portions of the AC voltage.

4. The method of any one of clauses 1 to 3, wherein the information indicative of the desired AC waveform comprises any one or more of: phase, phase increment; time increment information.

5. The method of any one of clauses 2 to 4, wherein the phase or time increment is predetermined.

6. The method of clause 5, wherein each node is provided with the predetermined phase or time increment.

7. The method of clause 4 or 5, wherein the phase or time increment is obtained from the information indicative of the desired AC waveform.

8. The method of any one of the preceding clauses, wherein a number of phases of the desired time-varying AC waveform is greater than or equal to one.

9. The method of clause 8, wherein the number of phases of the desired time-varying AC waveform is three.

10. The method of any one of the preceding clauses, wherein the operational data packet is transmitted using any one of: near field radio frequency; far field radio frequency, infrared; microwave; visible light; ultrasonic; free space optics, IEEE802.11 or IEEE802.15 communication protocols.

11. The method of any one of the preceding clauses, wherein the rotating reference frame is a Direct-Quadrature-Zero "dqz" reference frame.

12. The method of clause 11, wherein the desired AC waveform expressed in the dqz reference frame is a non-time varying waveform, and each node is configured to:

determine the one or more values of the non-time varying waveform in the dqz reference frame at the one or more times, using the information indicative of the rate of rotation of the dqz reference frame and the non-time varying waveform; and
convert the one or more values of the non-time varying waveform determined in the dqz reference frame at the one or more times, into one or more amplitude and phase values of the desired AC waveform in the stationary reference frame.

13. The method of any one of the preceding clauses, wherein each node is configured to control operation of the power switching circuit comprised in the node in accordance with an activation sequence, the activation sequence defining an order in which the plurality of nodes activate their associated power switching circuits to transform the DC voltage of the at least one energy storage cell comprised in each node to the portion of the AC voltage.

14. The method of clause 13, further comprising:
determining the activation sequence based on a state of each energy storage cell in the plurality of nodes.

15. The method of clause 14, further comprising:
measuring a state of the energy storage cell in the plurality of nodes, and determining the activation sequence based on the measured state of each energy storage cell.

16. The method of clause 14 or 15, wherein the state of the energy storage cell comprises any one of: voltage, state of charge, state of health or state of power.

17. The method of any one of clauses 13 to 16, wherein the power switching circuit comprises any one of: an H-bridge circuit, a half-bridge circuit, a boost converter.

18. The method of any one of the preceding clause, further comprising:

receiving information indicative of an output current output from the system when the system is operatively connected to an electrical load;
comparing the information indicative of the output current with the information indicative of the time-varying AC waveform; and
determining an AC waveform correction if the information indicative of the output current is not consistent with the desired time-varying AC waveform.

19. The method of clause 18, further comprising:
transmitting the AC waveform correction from the controller to the plurality of nodes via the communication channel.

20. The method of clause 18, further comprising:

generating a new operational data packet comprising information indicative of a new desired time-varying AC waveform expressed in the rotating reference frame, based on the determined AC waveform correction; and

transmitting the new operational data packet from the controller to the plurality of nodes via the communication channel.

21. The method of any of the clauses 18 to 20, wherein determining an AC waveform correction comprises compensating for a phase delay introduced between the controller and each node.

22. The method of clause 21, wherein compensating for the phase delay comprises applying a predetermined phase compensation value.

23. The method of any one of clauses 18 to 22, wherein determining the AC waveform correction comprises compensating for a time delay introduced between the controller and each node.

24. The method of clause 23, further comprising:
compensating for the time delay introduced between the controller and each node using a smith predictor.

25. The method of any one of clauses 18 to 24, wherein the electrical load comprises any one of: an electrical motor; an electrical generator; an electrical grid.

26. The method of clause 25, wherein the information indicative of the output current output from the system is received from a measurement device.

27. The method of clause 26, wherein the measurement device comprises a Hall Effect Sensor.

28. The method of any preceding clause, wherein the communication channel comprises a galvanically isolated wireless communication channel.

29. A processing module for transforming between a DC voltage and an AC voltage, configured for coupling to at least one energy storage cell, the processing module comprising:

a receiver configured to receive an operational data packet, the operational data packet comprising information indicative of a desired AC waveform expressed in a rotating reference frame, and information indicative of a rate of rotation of the reference frame as a function of time; and

at least one processor configured to:

synchronize an initial phase value with a phase at a controller located remotely from the processing module, using the information indicative of the desired AC waveform;

determine one or more values of a phase of the desired AC waveform at one or more times, using the information indicative of the rate of rotation of the reference frame and the AC waveform;

convert the one or more values of the desired AC waveform determined at the one or more times expressed in the rotating reference frame, into one or more amplitude and phase values of the desired AC waveform expressed in a stationary reference frame, and

control operation of a power switching circuit operatively connected to the at least one storage energy cell, to transform the DC voltage of the at least one energy storage cell, to at least a portion of the AC voltage, based on the one or more phase and amplitude values expressed in the stationary reference frame.

30. The processing module of clause 29, wherein the at least one processor is further configured to:

determine one or more subsequent values of the desired AC waveform at one or more subsequent times based on a phase or time increment;

convert the one or more determined subsequent values of the desired AC waveform expressed in the rotating reference frame, into values expressed in the stationary reference frame; and

control operation of the power switching circuit comprised in the node to transform the DC voltage of the at least one energy storage cell comprised in the node, to one or more subsequent portions of the AC voltage, based on the one or more determined subsequent values of the desired AC waveform expressed in the stationary reference frame.

31. The processing module of clause 30, wherein the at least one processor is configured to iteratively determine the one or more subsequent values of the desired AC waveform, convert the one or more determined subsequent values, and control operation of the power switching circuit to transform the DC voltage into the one or more subsequent portions of the AC voltage.

32. The processing module of any one of clauses 29 to 31, wherein the information indicative of the time-varying waveform comprises any one or more of: phase, phase increment; time increment information.

33. The processing module of any one of clauses 30 to 32, wherein the phase or time increment is predetermined.

34. The processing module of clause 33, wherein processing module is provided with the predetermined phase or time increment.

35. The processing module of clause 32 or 33, wherein the at least one processor is configured to obtain the phase or time increment from the information indicative of the time-varying waveform.

36. The processing module of any one of clauses 29 to 35, wherein a number of phases of the desired time-varying AC waveform is greater than or equal to one.

37. The processing module of clause 36, wherein the number of phases of the desired time-varying AC waveform is three.

38. The processing module of any one of clauses 29 to 37, wherein the receiver is configured to communicate using any one of: near field radio frequency; far field radio frequency, infrared; microwave; visible light; ultrasonic; free space optics, IEEE802.11 or IEEE802.15 communication protocols.

39. The processing module of any one of clauses 29 to 38, wherein the rotating reference frame is a Direct-Quadrature-Zero "dqz" reference frame.

40. The processing module of clause 39, wherein the desired AC waveform expressed in the dqz reference frame is a non-time varying waveform, and the at least one processor is configured to:

determine the one or more values of the non-time varying waveform in the dqz reference frame at the one or more times, using the information indicative of the rate of rotation of the dqz reference frame and the non-time varying waveform; and

convert the one or more values of the non-time varying waveform determined in the dqz reference frame at the one or more times, into one or more amplitude and phase values of the desired AC waveform in the stationary reference frame.

41. The processing module of any one of clauses 29 to 39, wherein the at least one processor is configured to control operation of the power switching circuit in accordance with an activation sequence, the activation sequence defining an order in which a plurality of processing modules activate their associated power switching circuits to transform the DC voltage of the at least one energy storage cell comprised in each processing module to the portion of the AC voltage.

42. The processing module of clause 41, wherein the activation sequence is determined based on a state of charge of each energy storage energy cell in the plurality of processing modules.

43. The processing module of clause 42, further comprising:
a measurement device for measuring a state of charge of the at least one energy storage cell to enable determination of the activation sequence based on the measured state of charge of the at least one energy storage cell.

44. The processing module of any one of clauses 41 to 43, wherein the power switching circuit comprises any one of: an H-bridge circuit, a half-bridge circuit, a boost converter.

45. The processing module of any one of clauses 29 to 44, wherein:
the transceiver is configured to receive an AC waveform correction based on a current output from the processing module not being consistent with the desired AC waveform, the output current being generated when the processing module is operatively connected to an electrical load.

46. The processing module of any one of clauses 29 to 44, wherein:

the transceiver is configured to receive a new operational data packet comprising information indicative of a new desired AC waveform expressed in the rotating reference frame, based on an AC waveform correction; wherein the AC waveform correction is based on a current output from the processing module not being consistent with the desired AC waveform, the output current being generated when the processing module is operatively connected to an electrical load.

47. The processing module of clause 45 or 46, wherein the electrical load comprises any one of: an electrical motor; an electrical grid.

48. The processing module of any one of clauses 45 to 47, further comprising a measurement device configured to measure the output current.

49. The processing module of clause 46, wherein the measurement device comprises a Hall Effect Sensor.

50. The processing module of any one of clauses 29 to 49, wherein the transceiver comprises a galvanically isolated wireless transceiver.

51. A controller for use in a system comprising a plurality of nodes, to transform between a DC voltage and an AC voltage, each node comprising at least one energy storage cell, the controller comprising:

at least one processor configured to:
generate an operational data packet, the operational data packet comprising information indicative of a desired AC waveform expressed in a rotating reference frame, and information indicative of a rate of rotation of the reference frame as a function of time;

a transceiver configured to transmit the operational data packet to the plurality of nodes, the operational data packet enabling each node to:

synchronize an initial phase value with a phase at the controller using the information indicative of the desired AC waveform;

determine one or more values of the desired AC waveform at one or more times, using the information indicative of the rate of rotation of the reference frame and the time-varying AC waveform;

convert the one or more values of the desired AC waveform determined at the one or more times expressed in the rotating reference frame, into one or more amplitude and phase values of the desired AC waveform expressed in a stationary reference frame; and

control operation of a power switching circuit comprised in the node to transform the DC voltage of the at least one energy storage cell comprised in the node, to at least a portion of the AC voltage, based on the one or more phase and amplitude values expressed in the stationary reference frame.

52. The controller of clause 51, wherein the information indicative of the time-varying waveform comprises any one or more of: phase, phase increment; time increment information.

53. The controller of clause 51 or 52, wherein the transceiver is configured to communicate using any one of: near field radio frequency; far field radio frequency, infrared; microwave; visible light; ultrasonic; free space optics, IEEE802.11 or IEEE802.15 communication protocols.

54. The controller of any one of clauses 51 to 53, wherein the rotating reference frame is a Direct-Quadrature-Zero "dqz" reference frame.

55. The controller of any one of clauses 51 to 54, wherein the transceiver is configured to transmit an activation sequence to each node, the activation sequence defining an order in which the plurality of nodes activate their associated power switching circuits to transform the DC voltage of the at least one energy storage cell comprised in each node to the portion of the AC voltage.

56. The controller of clause 55, wherein the at least one processor is configured to determine the activation sequence based on a state of charge of each energy storage cell in the plurality of nodes.

57. The controller of clause 56, wherein the transceiver is configured to:
receive a measurement indicative of a state of charge of each energy storage cell in the plurality of nodes; and
the at least one processor is configured to:
determine the activation sequence based on the received state of charge measurements.

58. The controller of any one of clauses 51 to 57, wherein the transceiver is configured to:
receive information indicative of an output current output from the system when the system is operatively connected to an electrical load;
the at least one processor is configured to:

compare the information indicative of the output current with the information indicative of the AC waveform; and
determine an AC waveform correction if the information indicative of the output current is not consistent with the desired AC waveform.

59. The controller of clause 58, wherein the transceiver is configured to transmit the AC waveform correction from the controller to the plurality of nodes via a communication channel.

60. The controller of clause 58, wherein the at least one processor is configured to:
generate a new operational data packet comprising information indicative of a new desired AC waveform expressed in the rotating reference frame, based on the determined AC waveform correction; and
the transceiver is configured to:
transmit the new operational data packet to the plurality of nodes via a communication channel.

61. The controller of any one of clauses 58 to 60, wherein the at least one processor is configured to compensate for a time delay introduced between the controller and each node when determining the AC waveform correction.

62. The controller of clause 61, wherein the at least one processor comprises a smith predictor configured to compensate for the time delay.

63. The controller of any one of clauses 58 to 62, wherein the electrical load comprises any one of: an electrical motor; an electrical grid.

64. The controller of clause 63, wherein the transceiver is configured to receive the information indicative of the output current output from the system, from a measurement device.

65. The controller of clause 64, wherein the measurement device comprises a Hall Effect Sensor, and the transceiver is configured to receive the information indicative of the output current from the Hall Effect Sensor.

66. The controller of any one of clauses 51 to 65, wherein the transceiver comprises a wireless transceiver.

67. A computer readable non-transitory medium, comprising instructions, which when executed by a computing device, cause the device to carry out the method of any one of clauses 1 to 28.

**Claims**

1. A method for transforming between a DC voltage and an AC voltage, in a system comprising a controller, a communication channel, and a plurality of nodes, each node comprising at least one energy storage cell and a processing module, and wherein the controller and each node communicate via the communication channel, the method comprising:

   generating an operational data packet, the operational data packet comprising information indicative of a desired AC waveform expressed in a rotating reference frame, and information indicative of a rate of rotation of the reference frame as a function of time;
   transmitting the operational data packet from the controller to the plurality of nodes via the communication channel;
   receiving the operational data packet at the plurality of nodes, and wherein each node is configured to:

   synchronize an initial phase value with the phase at the controller using the information indicative of the desired AC waveform;
   determine one or more values of the desired AC waveform at one or more times, using the information indicative of the rate of rotation of the reference frame and the time-varying AC waveform;
   convert the one or more values of the desired AC waveform determined at the one or more times expressed in the rotating reference frame, into one or more amplitude and phase values of the desired AC waveform expressed in a stationary reference frame; and
   control operation of a power switching circuit comprised in the node to transform the DC voltage of the at least one energy storage cell comprised in the node, to at least a portion of the AC voltage, based on the one or more phase and amplitude values expressed in the stationary reference frame.

2. The method of claim 1, wherein each node is further configured to:

   determine one or more subsequent values of the desired AC waveform at one or more subsequent times based on a phase or time increment;
   convert the one or more determined subsequent values of the desired AC waveform expressed in the rotating reference frame, into values expressed in the stationary reference frame; and
   control operation of the power switching circuit comprised in the node to transform the DC voltage of the at least one energy storage cell comprised in the node, to one or more subsequent portions of the AC voltage, based on the one or more determined subsequent values of the desired AC waveform expressed in the stationary reference frame.

3. The method of claim 2, wherein each node is configured to iteratively determine the one or more subsequent values of the desired AC waveform, convert the one or more determined subsequent values, and control operation of the power switching circuit to transform the DC voltage into the one or more subsequent portions of the AC voltage.

4. The method of any one of claims 1 to 3, wherein the information indicative of the desired AC waveform comprises any one or more of: phase, phase increment; time increment information.

5. The method of any one of the preceding claims, wherein the number of phases of the desired time-varying AC waveform is three.

6. The method of any one of the preceding claims, wherein the rotating reference frame is a Direct-Quadrature-Zero "dqz" reference frame.

7. The method of claim 6, wherein the desired AC waveform expressed in the dqz reference frame is a non-time varying waveform, and each node is configured to:

   determine the one or more values of the non-time varying waveform in the dqz reference frame at the one or more times, using the information indicative of the rate of rotation of the dqz reference frame and the non-time varying waveform; and

convert the one or more values of the non-time varying waveform determined in the dqz reference frame at the one or more times, into one or more amplitude and phase values of the desired AC waveform in the stationary reference frame.

8. The method of any one of the preceding claims, wherein each node is configured to control operation of the power switching circuit comprised in the node in accordance with an activation sequence, the activation sequence defining an order in which the plurality of nodes activate their associated power switching circuits to transform the DC voltage of the at least one energy storage cell comprised in each node to the portion of the AC voltage.

9. The method of claim 8, further comprising:

   determining the activation sequence based on a state of each energy storage cell in the plurality of nodes; and optionally

   measuring a state of the energy storage cell in the plurality of nodes, and determining the activation sequence based on the measured state of each energy storage cell.

10. The method of claim 9, wherein the state of the energy storage cell comprises any one of: voltage, state of charge, state of health or state of power.

11. The method of any one of the preceding claims, wherein the power switching circuit comprises any one of: an H-bridge circuit, a half-bridge circuit, a boost converter.

12. The method of any one of the preceding claims, further comprising:

   receiving information indicative of an output current output from the system when the system is operatively connected to an electrical load;

   comparing the information indicative of the output current with the information indicative of the time-varying AC waveform; and

   determining an AC waveform correction if the information indicative of the output current is not consistent with the desired time-varying AC waveform.

13. The method of claim 12, further comprising:

   transmitting the AC waveform correction from the controller to the plurality of nodes via the communication channel;

   generating a new operational data packet comprising information indicative of a new desired time-varying AC waveform expressed in the rotating reference frame, based on the determined AC waveform correction; and

   transmitting the new operational data packet from the controller to the plurality of nodes via the communication channel.

14. The method of claim 12 or 13, wherein determining the AC waveform correction comprises compensating for a time delay introduced between the controller and each node using a smith predictor.

15. A processing module for transforming between a DC voltage and an AC voltage, configured for coupling to at least one energy storage cell, the processing module comprising:

   a receiver configured to receive an operational data packet, the operational data packet comprising information indicative of a desired AC waveform expressed in a rotating reference frame, and information indicative of a rate of rotation of the reference frame as a function of time; and

   at least one processor configured to:

   synchronize an initial phase value with a phase at a controller located remotely from the processing module, using the information indicative of the desired AC waveform;

   determine one or more values of a phase of the desired AC waveform at one or more times, using the information indicative of the rate of rotation of the reference frame and the AC waveform;

   convert the one or more values of the desired AC waveform determined at the one or more times expressed in the rotating reference frame, into one or more amplitude and phase values of the desired AC waveform expressed in a stationary reference frame, and

control operation of a power switching circuit operatively connected to the at least one storage energy cell, to transform the DC voltage of the at least one energy storage cell, to at least a portion of the AC voltage, based on the one or more phase and amplitude values expressed in the stationary reference frame.

16. A controller for use in a system comprising a plurality of nodes, to transform between a DC voltage and an AC voltage, each node comprising at least one energy storage cell, the controller comprising:

at least one processor configured to:

generate an operational data packet, the operational data packet comprising information indicative of a desired AC waveform expressed in a rotating reference frame, and information indicative of a rate of rotation of the reference frame as a function of time;

a transceiver configured to transmit the operational data packet to the plurality of nodes, the operational data packet enabling each node to:

synchronize an initial phase value with a phase at the controller using the information indicative of the desired AC waveform;

determine one or more values of the desired AC waveform at one or more times, using the information indicative of the rate of rotation of the reference frame and the time-varying AC waveform;

convert the one or more values of the desired AC waveform determined at the one or more times expressed in the rotating reference frame, into one or more amplitude and phase values of the desired AC waveform expressed in a stationary reference frame; and

control operation of a power switching circuit comprised in the node to transform the DC voltage of the at least one energy storage cell comprised in the node, to at least a portion of the AC voltage, based on the one or more phase and amplitude values expressed in the stationary reference frame.

17. A computer readable non-transitory medium, comprising instructions, which when executed by a computing device, cause the device to carry out the method of any one of claims 1 to 14.

22

Figure 1A
(Prior Art)

EP 4 687 278 A1

Figure 1B
(Prior Art)

Figure 1B
(Prior Art)

160

102

160a

160b

150

160c

High Voltage
Battery System

Low voltage switches with
local capacitance energy storage

Small *dV/dt* Filter

3φ
Motor

170

180

160x

EP 4 687 278 A1

Figure 2
(Prior Art)

200

Figure 3

Figure 4

Figure 5

EP 4 687 278 A1

610

Live

615 H Bridge Control
Out H
H Bridge
Out L

614 H Bridge Control
Out H
H Bridge
Out L

613 H Bridge Control
Out H
H Bridge
Out L

612 H Bridge Control
Out H
H Bridge
Out L

611 H Bridge Control
Out H
H Bridge
Out L

Neutral

620

How a sine wave is formed

V

1    2    3

t

100% on
PWM output

Point 1    Point 2    Point 3
any combination shown.

L    L    L    L    L    L    L

+ PWM    I    - PWM    - PWM    - PWM    - PWM    I

+    I    I    I    -    -    I

+    I    -    I    -    -    -

+    I    -    I    I    -    -

+    I    -    I    -    -    PWM

N    N    N    N    N    N    N

621    622    623a    623b    623c    623d    623e

**Node output key:**
+ Positive
- Negative
I Passthrough

Figure 6

# Figure 7

# Figure 8

# Figure 9

EP 4 687 278 A1

Figure 10

EP 4 687 278 A1

**EUROPEAN SEARCH REPORT**

Application Number

EP 24 19 1916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/093000 A1 (EKSTRÖM MARKUS [SE]) 23 March 2023 (2023-03-23) <br> * figures 1, 4A * <br> * paragraphs [0065] - [0087]; figures 3,8,11 * <br> * paragraph [0142] - paragraph [0152]; figures 24, 25, 27 * <br> ----- | 1-17 | INV. <br> H02M7/49 <br> H02M7/483 <br> H02M1/32 |
| A | WO 2023/183491 A1 (TAE TECH INC [US]; SUYAKOV SERGEY [US]; GOLUBEV SERGEY [RU]) 28 September 2023 (2023-09-28) <br> * paragraph [0131]; figure 7C * <br> * paragraphs [0081], [0143] - [0148]; figures 9A, 9B * <br> * paragraph [0194] * <br> * paragraph [0285]; figure 18 * <br> ----- | 1-17 | |
| A | US 2021/075339 A1 (IDO YASUNORI [JP] ET AL) 11 March 2021 (2021-03-11) <br> * paragraph [0040] - paragraph [0102]; figures 1-9 * <br> ----- | 1-17 | |

TECHNICAL FIELDS
SEARCHED (IPC)

H02M

The present search report has been drawn up for all claims

| Place of search | Date of completion of the search | Examiner |
|---|---|---|
| The Hague | 10 January 2025 | van Wesenbeeck, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 1916

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | Publication date | Patent family member(s) | | Publication date |
|---|---|---|---|---|
| US 2023093000 A1 | 23-03-2023 | NONE | | |
| WO 2023183491 A1 | 28-09-2023 | AU | 2023239011 A1 | 07-11-2024 |
| | | US | 2023308006 A1 | 28-09-2023 |
| | | WO | 2023183491 A1 | 28-09-2023 |
| US 2021075339 A1 | 11-03-2021 | EP | 3745582 A1 | 02-12-2020 |
| | | JP | 6425855 B1 | 21-11-2018 |
| | | JP | WO2019142361 A1 | 23-01-2020 |
| | | US | 2021075339 A1 | 11-03-2021 |
| | | WO | 2019142361 A1 | 25-07-2019 |

EPO FORM P0459